# FASCICULE DE BREVET EUROPEEN

(11) **EP 2 449 792 B1**
(45) Date de publication et mention de la délivrance du brevet: **17.12.2014**
(21) Numéro de dépôt: 10745362.3
(22) Date de dépôt: 29.06.2010
(51) Int. Cl.: H04Q 11/00

(54) **PROCEDE DE TRAITEMENT D'UNE REQUETE DE RESERVATION DE RESSOURCES, DISPOSITIF ET EQUIPEMENT NOEUD ASSOCIES**
VERFAHREN ZUM BEARBEITEN VON BETRIEBSMITTELRESERVIERUNGSANFRAGEN UND ENTSPRECHENDE EINRICHTUNG UND KNOTENVORRICHTING
METHOD OF HANDLING A RESOURCE RESERVATION REQUEST WITH ASSOCIATED DEVICE AND NODE EQUIPMENT

(30) Priorité: 30.06.2009 FR 0954453
(43) Date de publication de la demande: 09.05.2012
(73) Titulaire: Orange, 75015 Paris (FR)
(72) Inventeur: LE ROUZIC, Esther, F-22560 Trebeurden (FR); JOBERT, Sébastien, F-22140 Begard (FR)
(74) Mandataire: Millet, Sandrine
(86) Numéro de dépôt international: PCT/FR2010/051348
(87) Numéro de publication internationale: WO 2011/001098

(56) Documents cités:
- YOO M ET AL: "A HIGH SPEED PROTOCOL FOR BURSTY TRAFFIC IN OPTICAL NETWORKS", PROCEEDINGS OF THE SPIE - THE INTERNATIONAL SOCIETY FOR OPTICAL ENGINEERING, SPIE, US, vol. 3230, 2 novembre 1997 (1997-11-02), pages 79-90, XP008041027, ISSN: 0277-786X
- ZHOU LAN ET AL: "Performance of distributed control protocol for WR-OBS systems", COMMUNICATIONS, 2004 AND THE 5TH INTERNATIONAL SYMPOSIUM ON MULTI-DIME NSIONAL MOBILE COMMUNICATIONS PROCEEDINGS. THE 2004 JOINT CONFERENCE O F THE 10TH ASIA-PACIFIC CONFERENCE ON BEIJING, CHINA 29 AUG.-1 SEPT. 2004, PISCATAWAY, NJ, USA,IEEE, US, vol. 2, 29 août 2004 (2004-08-29), pages 522-526, XP010765014, ISBN: 978-0-7803-8601-3
- OVADIA S ET AL: "PHOTONIC BURST SWITCHING (PBS) ARCHITECTURE FOR HOP AND SPAN-CONSTRAINED OPTICAL NETWORKS", IEEE COMMUNICATIONS MAGAZINE, IEEE SERVICE CENTER, PISCATAWAY, US, vol. 41, no. 11, 1 novembre 2003 (2003-11-01), pages S24-S32, XP001185181, ISSN: 0163-6804, DOI: DOI:10.1109/MCOM.2003.1244925
- CHUNMING QIAO: "Labeled Optical Burst Switching for lP-over-WDM lntegration", IEEE COMMUNICATIONS MAGAZINE, IEEE SERVICE CENTER, PISCATAWAY, US, vol. 38, no. 9, 1 septembre 2000 (2000-09-01), pages 104-114, XP011091349, ISSN: 0163-6804, DOI: DOI:10.1109/35.868149

## Description

### Domaine de l'invention

Le domaine de l'invention est celui des télécommunications, et plus particulièrement des réseaux de télécommunications optiques mettant en oeuvre une commutation de circuits.

La présente invention concerne un procédé de réservation de ressources retardée. Elle concerne également un équipement noeud d'un réseau de télécommunications optiques mettant en oeuvre un tel procédé.

Les techniques actuelles de commutation de circuits optiques ("Optical Circuit Switching" ou OCS, en anglais) s'appuient sur une réservation des ressources préalable à l'envoi des données. Des méthodes de réservation de ressources ont été spécifiées par des organismes de normalisation comme l'IETF dans la spécification du protocole de commande GMPLS (Generalized Multi Protocol Label Switching) ou comme l'ITU au sein du plan de commande ASON (Automatically Switched Optical Network).

La réservation peut par exemple être réalisée de la façon suivante : La réservation de ressources dans chaque noeud de la connexion est déclenchée à un noeud source à réception d'une requête d'établissement de la connexion. La réservation s'appuie sur un mécanisme de signalisation mis en oeuvre grâce à un protocole de signalisation. Ce mécanisme consiste à envoyer un message de requête de réservation ("set-up", en anglais) du noeud source vers le noeud destination puis à renvoyer un message d'accusé-réception du noeud destination vers le noeud source en suivant le même chemin qu'à l'aller. A réception de l'accusé-réception au noeud source, la connexion est établie et les données sont transférées au noeud destination sur cette connexion. L'identification des ressources disponibles pour la connexion en cours est réalisée dans chaque noeud au passage du message de requête de réservation. Ces informations peuvent être collectées par le message de requête de réservation.

Le choix de la route de connexion (succession des noeuds ABCD) peut être fait par le noeud source. Dans ce cas, le noeud source doit mettre en oeuvre un algorithme de routage sur la base de la topologie qu'il aura élaborée grâce à d'autres messages de commande (protocole de routage) par exemple. La route explicite doit alors être indiquée dans les messages de requête de réservation et d'accusé de réception afin que les noeuds recevant ces messages sachent à qui les transférer. Le choix de la route de la connexion (succession des noeuds ABCD) peut aussi être fait bond par bond, chaque noeud calculant le saut suivant sur la base de sa connaissance de la topologie. Dans ce cas, les messages de requête doivent contenir le noeud destination et mettre à jour la route pour que le message d'accusé de réception emprunte bien les mêmes noeuds qu'à l'aller (une combinaison des deux solutions est aussi possible).

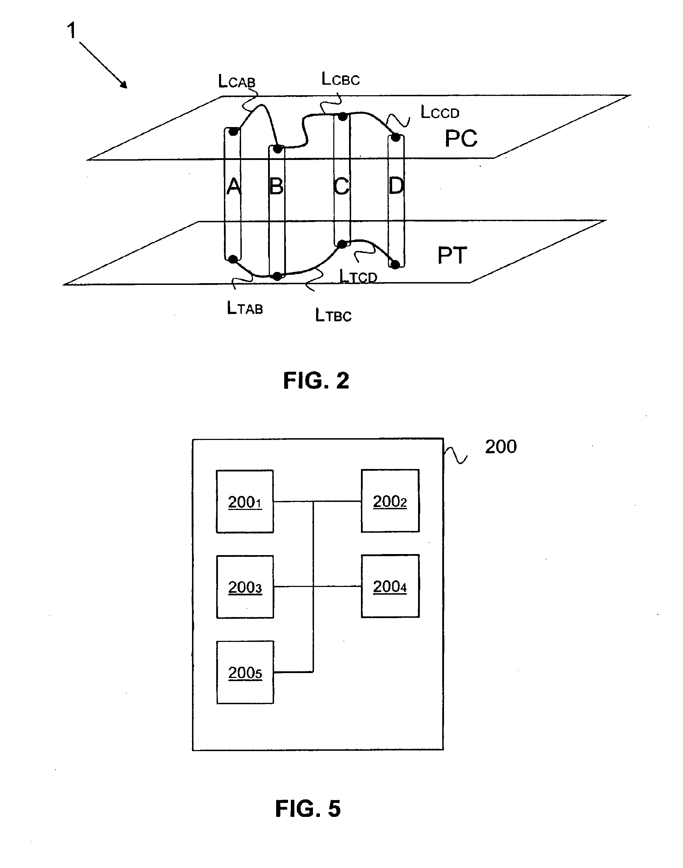

Afin de bien séparer les processus de commande du réseau des processus de création des connexions sur la couche optique, le formalisme de plan de commande et de plan de transfert est classiquement utilisé. Un tel formalisme est représenté de façon schématique sur la **Fig. 2****.** Un réseau de télécommunications 1 comprend des équipements noeuds A, B, C et D reliés entre eux par des liens optiques. Chaque noeud est présent à la fois dans le plan de transfert PT, du fait des ressources optiques qu'il contrôle, et dans le plan de commande PC, car il dispose de fonctions permettant de comprendre et de traiter les messages du plan de commande.

Les messages de signalisation sont échangés sur le plan de commande PC tandis que les ressources sont réservées dans le plan de transfert PT. Comme représenté de façon schématique sur la Fig. 2, les supports physiques L_{CAB}, L_{CBC}, L_{CCD} du plan de commande PC ne sont pas nécessairement identiques à ceux L_{TAB}, L_{TBC}, L_{TCD} du plan de transfert PT. Autrement dit, un lien de commande entre deux noeuds ne passe pas forcément par le même support de fibres optiques que le lien du plan de transfert. De plus, les noeuds n'ont pas forcément connaissance des supports physiques respectifs des liens du plan de commande et du plan de transfert.

La réservation des ressources par des échanges de messages de noeud en noeud permettent de distribuer la commande de la couche optique dans chaque noeud (cas distribué), contrairement au cas où les messages de requête de réservation et d'accusé-réception sont émis et reçus par une seule entité centralisée (cas centralisé). La réservation des ressources peut être effectuée dans les noeuds en fonction de la disponibilité des ressources à réception des messages de requête de réservation (réservation à l'aller) ou des messages d'accusé-réception (réservation au retour).

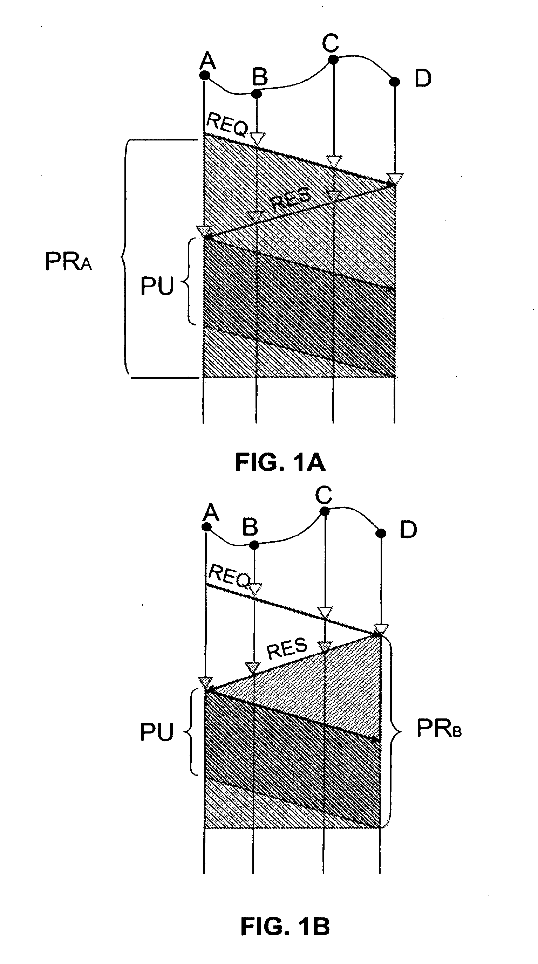

En relation avec les figures 1A et 1B, on considère une route ABCD d'un réseau optique 1 déterminé par le plan de commande d'un réseau de télécommunications 1. En vue du transfert de données d'un équipement noeud A vers un équipement noeud D, l'équipement noeud A émet un message de signalisation comprenant une requête de réservation REQ à destination de l'équipement noeud D via le chemin ABCD. La figure 1A illustre le cas d'une réservation à l'aller, selon laquelle les noeuds du chemin ABCD initient la réservation dès réception du message de requête de réservation REQ. L'équipement noeud destinataire D émet un message de signalisation RES vers l'équipement source A indiquant que la réservation est effective. Ce message RES est reçu et retransmis par tous les noeuds intermédiaires. Les ressources ne seront ensuite relâchées que sur réception d'un message de signalisation demandant le relâchement des ressources. On considère ensuite une période PU correspondant à la période utile pendant laquelle les ressources sont utilisées pour le transfert des données et une période de réservation PR correspondant à la période totale pendant laquelle les ressources sont réservées par les noeuds du chemin ABCD en vue du transfert de ce données. On constate que le temps de réservation des données PR_{A} est bien supérieur au temps de réservation utile et que le temps de réservation inutile n'est pas négligeable, en particulier dans le cas où la période utile PU est d'un ordre de grandeur similaire à la durée de signalisation. On notera que ce temps de réservation inutile est d'autant plus important que la durée de transfert des données est proche d'une durée de signalisation, c'est-à-dire d'une durée englobant les temps de traitement de la requête par les équipements noeuds sur la route ABCD et les temps de propagation de la requête sur les liens optiques entre les équipements noeuds A, B, C et D.

La **Fig. 1B** illustre le cas d'une réservation au retour, ce qui signifie que les noeuds constituant la route ABCD ne rendent la réservation de ressources effective qu'à la réception d'un message d'accusé-réception RES émis par l'équipement noeud destinataire D en réponse à la requête REQ. Il en résulte que la période de réservation PR_{B} est inférieure à la durée PR_{A} et donc que le temps de réservation inutile est plus court.

Dans les deux cas, la réservation des ressources est effective avant le début du transfert des données sur la route ABCD, ce qui entraine une occupation des ressources pendant une période où aucun trafic ne les utilise. De même les ressources ne sont relâchées qu'après la réception d'un message de relâchement, et les noeuds gérant leurs ressources n'ont a priori aucune indication sur le moment où ce message va arriver. Dans le cas où la durée de propagation des données est proche de la durée de signalisation, ces temps de réservation "inutiles" ne sont pas négligeables et limitent la rapidité d'enchaînement des réservations.

Il en résulte que les techniques actuelles de réservation de ressources sont peu adaptées à un trafic dynamique composé d'une succession de périodes de réservations courtes et fréquentes. Dans un tel contexte, il pourrait s'avérer utile d'établir les connexions en fonction des besoins, que ce soit dans le coeur de réseau ou au niveau d'un équipement terminal.

### Inconvénients de l'art antérieur

Pour améliorer la situation, le principe de réserver les ressources de façon retardée pour une durée déterminée ("Just Enough Time", en anglais) a été énoncé dans l'art antérieur, en particulier dans le document intitulé "Improved Dynamic Lightpath Provisioning For Large Wavelength Division Multiplexed Backbones", par H. Kong and C. Phillips, dans la revue Journal of Lightwave Technologies, vol. 25, No 7, pp 1693-1701, en 2007. Toutefois, un tel document ne décrit pas de façon explicite comment calculer le retard utile à prendre en compte au niveau de chaque équipement noeud.

Un autre procédé de traitement d'une requête de réservation de ressources est divulguée dans le document YOO M ET AL: "A High Speed Protocol for Bursty Traffic in Optical Networks", Proceedings of SPIE, vol. 3229, 2 novembre 1997, pages 79-90.

### Exposé de l'invention

L'invention concerne un procédé de traitement d'une requête de réservation de ressources retardée pour établir une connexion dans un réseau de télécommunications optiques entre un équipement source et un équipement destination connectés audit réseau, le plan de commande étant différent du plan de transfert.

Selon l'invention, un tel procédé est particulier en ce qu'il comprend, sur réception par un équipement noeud du réseau de la requête de réservation de ressources en provenance de l'équipement source et à destination de l'équipement destination via une route comprenant au moins un équipement noeud, ladite requête comprenant au moins un premier paramètre relatif à un début de connexion au niveau de l'équipement source, les étapes suivantes :
- obtention d'une information relative à un temps de transfert d'un signal via ladite route jusqu'à un équipement noeud amont dudit équipement noeud sur la route,
- mise à jour de ladite information par ajout d'un temps de transfert au niveau dudit équipement intermédiaire, et
- calcul d'une date de début de réservation des ressources au niveau de l'équipement noeud à partir de la valeur dudit premier paramètre reçu et de ladite information obtenue.

Le procédé selon l'invention est mis en oeuvre dans le plan de commande du réseau de télécommunications considéré, c'est-à-dire que la mise en oeuvre de la réservation retardée s'appuie sur le contenu de messages de signalisation reçus par l'équipement noeud d'un équipement noeud amont sur la route choisie pour établir la connexion et transférer des données utiles.

On entend par temps de transfert une durée comprenant au moins le temps nécessaire à la propagation de la requête dans le plan de commande ou de données dans le plan de transfert et/ou le temps de traitement de la requête de réservation par les équipements noeuds de la route choisie pour relier l'équipement source à l'équipement destination.

Parmi les informations contenues dans cette requête de réservation, un équipement noeud intermédiaire placé sur ladite route, obtient au moins une information permettant de déterminer la date de début de connexion au niveau de l'équipement noeud source.

Avec l'invention, un équipement noeud intermédiaire peut dériver sa propre date de début de réservation des ressources des informations essentielles qu'il reçoit dans la requête ou qu'il obtient par ailleurs.

L'invention propose donc une approche nouvelle et inventive de réservation des ressources qui permet à un équipement noeud de la route de signalisation de calculer les instants de début et fin de la réservation demandée et donc d'utiliser ses ressources de façon optimale. Elle offre donc une solution technique pour la mise en oeuvre du principe de réservation "Just Enough Time".

Avantageusement, la requête comprend en outre la durée souhaitée de connexion. Cette durée permet notamment à l'équipement noeud d'estimer date de fin de connexion et donc de fin de réservation des ressources.

Selon un aspect de l'invention, l'information relative à un temps de transfert est obtenue dans un deuxième paramètre de la requête reçue.

Un avantage est de fournir à l'équipement noeud une information relative au temps de transfert optique en amont de l'équipement noeud et de lui éviter des opérations de récupération de cette information auprès d'une ou plusieurs sources.

Selon un autre aspect de l'invention, lorsque l'équipement noeud est un équipement noeud intermédiaire, ledit procédé comprend une étape d'envoi de la requête à un équipement noeud aval sur ladite route, ladite requête comprenant la valeur mise à jour de ladite information dans le deuxième paramètre.

Le paramètre comprenant l'information relative au temps de transfert est donc mis à jour par chaque équipement noeud intermédiaire et la nouvelle valeur est insérée dans la requête de réservation avant son envoi à l'équipement noeud aval. Un avantage est que le noeud aval dispose d'une information actualisée à partir de laquelle il peut calculer de façon précise sa propre date de début de réservation.

Selon un autre aspect de l'invention, lorsque les équipements noeuds du réseau sont synchronisés en temps, le premier paramètre comprend une date de début de réservation pour l'équipement source et l'étape de calcul d'une date de réservation des ressources au niveau de l'équipement noeud comprend l'addition de la valeur de ladite information et de la valeur du premier paramètre.

Lorsque les équipements noeuds sont synchronisés en temps, ils disposent tous d'une référence temporelle commune. Avantageusement, le premier paramètre relatif à un début de connexion est donc une date de début de connexion. Pour connaître sa propre date de début de connexion et donc de réservation, l'équipement noeud intermédiaire lui ajoute un temps de transfert sur la route de l'équipement source jusqu'à lui, qu'il peut déduire de l'information qu'il a obtenue et d'éventuels calculs qu'il aura menés au préalable.

Selon un autre aspect de l'invention, lorsque les équipements noeuds du réseau sont non synchronisés en temps, le premier paramètre est une durée d'attente avant la date de début de réservation pour l'équipement source et l'étape de calcul d'une date de réservation des ressources au niveau de l'équipement noeud comprend la soustraction de la valeur mise à jour de ladite information à une date de réception de la requête par l'équipement noeud intermédiaire augmentée de la valeur du premier paramètre.

Dans ce cas, les équipements noeuds sur la route empruntée par la requête ne disposent pas d'une référence de temps commune. Rien ne sert donc de leur transmettre une date de début de connexion pour l'équipement noeud source. La durée d'attente pour l'équipement source peut en revanche être ajoutée à une date de réception de la requête après soustraction de l'information relative au temps de transfert obtenue.

On notera que bien que la littérature semble tenir pour acquis que les équipements noeuds optiques soient synchronisés en temps pour la réservation de ressources, le niveau d'exactitude requis pour les durées de connexion visées (de la milliseconde à la seconde) rend la synchronisation des noeuds difficilement réalisable avec les techniques actuelles. Un avantage de l'invention est donc de prendre en compte cette difficulté et de proposer une solution simple et fiable pour la contourner.

Selon un autre aspect de l'invention, l'information relative à un temps de transfert comprend un terme relatif à une somme de temps de propagation via ladite route jusqu'à l'équipement noeud amont et la mise à jour de cette information comprend un ajout de la durée de propagation entre l'équipement noeud amont et l'équipement noeud intermédiaire à la valeur reçue dudit paramètre.

Un avantage de l'invention est de prendre en compte les temps de propagation sur les liens optiques entre les noeuds. Il peut s'agir des temps de propagation de la requête dans le plan de commande ou des données dans le plan de transfert.

On comprend que cet aspect de l'invention est particulièrement avantageux car le plan de transfert et le plan de commande n'utilisent pas le même support de fibres pour relier les équipements noeuds A, B, C et D de la route choisie en vue d'établir la connexion.

De façon avantageuse, ledit terme de ladite information comprend une différence entre une somme des temps de propagation de la requête et la somme des temps de propagation des données jusqu'à l'équipement noeud amont.

Ce terme est particulièrement utile dans le cas où non seulement le support de fibres utilisé dans le plan de commande pour acheminer la requête de réservation diffère de celui utilisé dans le plan de transfert pour acheminer les données à transmettre, mais en outre les équipements noeuds ne sont pas synchronisés en temps. Dans cette configuration en effet, l'équipement noeud n'a pas accès à une date de début de connexion au niveau de l'équipement source à laquelle se référer et qu'il pourra utiliser comme point de départ pour calculer sa propre date de réservation.

L'invention permet ainsi d'assurer une estimation fiable et précise de la date de début de réservation des ressources au niveau d'un équipement noeud intermédiaire en prenant en compte une telle différence.

Selon un autre aspect de l'invention, le terme de ladite information relative à un temps de transfert via ladite route jusqu'à l'équipement noeud amont est obtenu à partir d'une mesure d'un temps de propagation de données de l'équipement noeud intermédiaire vers un équipement noeud amont selon les sous-étapes suivantes :
- envoi d'une requête de mesure à l'équipement noeud amont, ladite requête comprenant une indication d'un port d'entrée et d'un port de sortie dudit équipement noeud intermédiaire pour ladite mesure;
- sur réception d'un message de réponse positive de l'équipement noeud amont, déclenchement de la mesure par envoi d'un signal de type sonde depuis le port de sortie indiqué vers l'équipement noeud amont; et
- stoppage de la mesure à réception du signal de type sonde par l'équipement noeud intermédiaire sur le port d'entrée indiqué.

Une telle mesure peut être faite dans le plan de transfert et/ou dans le plan de commande. Elle permet d'obtenir de façon simple une estimation précise d'un temps de propagation sur un lien optique entre un équipement noeud et un de ses voisin. Un avantage de cette mesure est qu'une fois que l'équipement noeud voisin a configuré ses ports d'entrée et de sortie, la mesure se fait de façon transparente, au niveau optique et sans intervention de sa part.

Un autre avantage de la mesure est que, du fait que le noeud voisin n'intervient pas, on obtient réellement le temps de propagation aller-retour sur le lien optique sans temps de traitement. Il faut seulement diviser par deux la valeur obtenue pour avoir un temps de propagation simple.

On notera que, lorsque le temps de transfert comprend un terme relatif au temps de propagation de la requête ou de données, l'étape de mise à jour de ladite information pourra avantageusement être faite avant ou après le calcul de la date de début de réservation selon le mode d'obtention du temps de transfert. A titre d'exemple, si les temps de transfert sont obtenus par la mesure précédente et transmis à l'équipement noeud aval dans la requête, l'ordre des étapes sera imposé par le contenu de l'information relative au temps de transfert contenu dans la requête. En d'autres termes, si le deuxième paramètre contient la mesure du temps de transfert sur le lien optique entre l'équipement noeud amont et l'équipement noeud intermédiaire, le calcul pourra se faire avant la mise à jour, sinon ce sera l'inverse.

L'invention concerne aussi un dispositif de traitement d'une requête de réservation de ressources retardée dans un réseau de télécommunications optiques pour transférer des données entre un équipement source et un équipement destination, le plan de commande étant différent du plan de transfert.

Un tel dispositif est particulier en ce que, sur réception par un équipement noeud du réseau de la requête de réservation de ressources en provenance de l'équipement source et à destination de l'équipement destination via une route comprenant au moins un équipement noeud, ladite requête comprenant au moins un premier paramètre relatif à un début de la connexion au niveau de l'équipement source, ledit dispositif est apte à mettre en oeuvre les moyens suivants :
- obtention d'une information relative à un temps de transfert via ladite route jusqu'à un équipement noeud amont,
- mise à jour de ladite information par ajout d'un temps de transfert au niveau dudit équipement intermédiaire, et
- calcul d'une date de début de réservation des ressources au niveau de l'équipement noeud à partir de la valeur dudit paramètre reçu et de ladite information obtenue.

De façon avantageuse, sur réception d'une requête de mesure en provenance d'un équipement noeud voisin, ledit dispositif est apte à mettre en oeuvre les moyens suivants :
- identification d'un port d'entrée et d'un port de sortie dans la requête de mesure;
- commande de bouclage du port d'entrée et du port de sortie identifiés;
- envoi d'un message d'acquittement à destination de l'équipement noeud voisin.

Un tel dispositif est donc apte à répondre à une requête de mesure de durée de transit en provenance d'un équipement noeud voisin.

Un avantage est de mesurer un temps de propagation d'une requête ou de données directement sur la couche physique du réseau de télécommunications, en utilisant les équipements noeuds de façon transparente, c'est-à-dire sans traduction du signal optique de type sonde en signal électronique.

L'invention concerne aussi un équipement noeud d'un réseau de télécommunications apte à transférer des données en provenance d'un équipement source et à destination d'un équipement destination connectés audit réseau, caractérisé en ce qu'il comprend un dispositif de réservation de ressources retardée selon l'invention.

Un tel équipement noeud peut recevoir la requête d'un autre équipement noeud du réseau ou bien d'un équipement connecté au réseau tel qu'un équipement client terminal.

L'invention concerne également un réseau de télécommunications optiques apte à transmettre des données entre un équipement source et un équipement destination par l'intermédiaire d'au moins un équipement noeud intermédiaire dudit réseau, caractérisé en ce que ledit équipement noeud comprend un dispositif de réservation de ressources retardée selon l'invention.

Dans un mode particulier de réalisation, les différentes étapes du procédé de réservation retardée de ressources selon l'invention sont déterminées par des instructions de programmes d'ordinateurs.

En conséquence, l'invention vise aussi un programme d'ordinateur sur un support d'informations, ce programme étant susceptible d'être mis en oeuvre dans un équipement noeud ou plus généralement dans un ordinateur, ce programme comportant des instructions adaptées à la mise en oeuvre des étapes d'un procédé de réservation retardée de ressources tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement; le support d'informations peut être un circuit intégré dans lequel le programme est incorporé, le circuit étant adapté pour exécuter pour être utilisé dans l'exécution du procédé en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 2 illustre un plan de commande et un plan de transfert d'un réseau de télécommunications par commutation de circuits selon l'art antérieur;
- les figures 1A et 1B illustrent respectivement les principes de la réservation à l'aller et au retour selon l'art antérieur;
- la figure 3 présente de façon schématique un réseau de télécommunications optique par commutation de circuits selon l'invention;
- la figure 4 présente de façon schématique les étapes du procédé de réservation de ressources retardée selon l'invention;
- la figure 5 présente la structure d'un dispositif de réservation de ressources retardée selon l'invention;
   la figure 6 illustre un exemple de réalisation de l'invention dans le mode synchronisé en temps, lorsque les messages de signalisation empruntent un support optique différent de celui des données dans le réseau de télécommunications;
- la figure 7 illustre un exemple de réalisation de l'invention dans le mode non synchronisé en temps, lorsque les messages de signalisation empruntent un support optique différent de celui des données dans le réseau de télécommunications;
- la figure 8 illustre un mode de réalisation d'une mesure d'un temps de propagation d'un signal entre un équipement noeud et un équipement noeud voisin selon un aspect de l'invention.

### Description d'un mode de réalisation particulier de l'invention

Le principe général de l'invention repose sur la réception d'une requête de réservation de ressources réseaux par un équipement noeud du réseau de télécommunications situé sur une route choisie pour établir une connexion entre un équipement source et un équipement destination et sur la mise à jour de cette requête à partir du temps de traitement de la requête au niveau de l'équipement noeud.

Selon l'invention, cette requête indique au moins la durée de connexion souhaitée, un paramètre relatif au début de la connexion et un paramètre relatif au temps de traitement cumulé en amont du noeud courant. Il en résulte que l'équipement noeud courant peut en déduire les modalités de la connexion à son niveau.

Dans la suite de la description, on considère le cas où la réservation des ressources aux dates déterminées est réalisée au passage du message de requête de réservation REQ ou au passage du message d'accusé-réception AR. On comprend qu'il ne s'agit ni d'une réservation à l'aller, ni d'une réservation au retour, mais bien d'une réservation retardée à la date de réservation calculée par le noeud selon l'invention.

Dans les exemples présentés, l'invention sera décrite dans le cas distribué, bien qu'elle puisse aussi s'appliquer au cas centralisé.

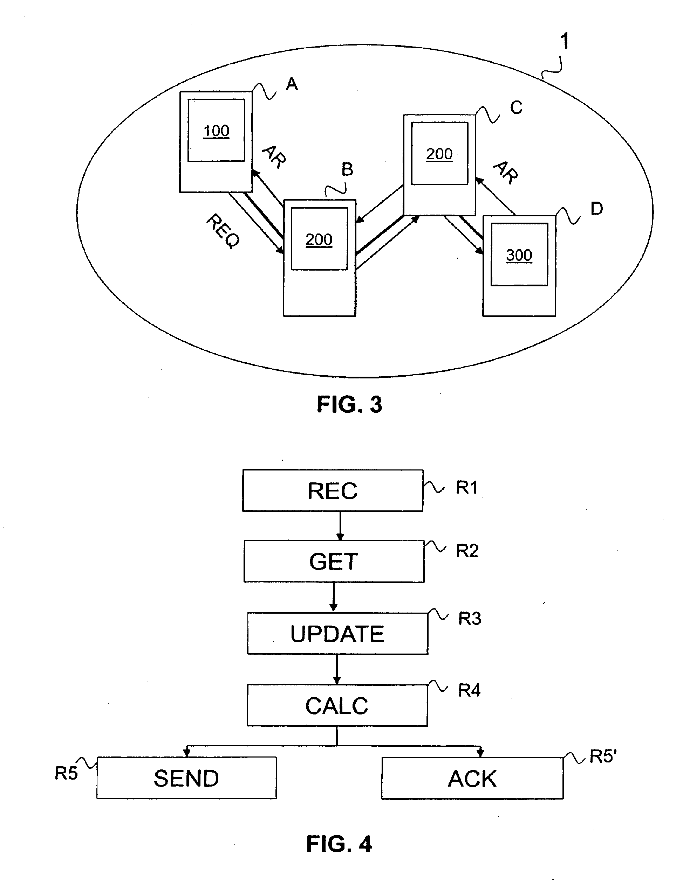

On présente en relation avec la Fig. 3 un réseau de télécommunications 1 comprenant une pluralité d'équipements noeuds A, B, C et D aptes à mettre en oeuvre le procédé de réservation de ressources retardé selon l'invention. On considère le cas où l'équipement noeud A, dit noeud source, souhaite établir une connexion avec l'équipement noeud D, dit équipement destination.

De façon connue l'équipement noeud A émet un message de signalisation comprenant une requête de réservation à destination de l'équipement destination D. Sur réception R1 de ladite requête, un équipement noeud B, C de la route choisie pour acheminer les données de l'équipement source A vers l'équipement destination D, est apte à mettre en oeuvre le procédé de réservation de ressources retardée selon l'invention, qui va maintenant être décrit plus en détails en relation avec la **Fig. 4****.**

La requête REQ comprend au moins un paramètre relatif à un début de la connexion au niveau de l'équipement source A. Il peut s'agir notamment d'une date de début de connexion t_{c} au niveau de l'équipement source A ou d'une durée d'attente Lw avant le début de la connexion au niveau de l'équipement source A.

Dans une étape R2, une information relative à un temps de transfert d'un signal via ladite route jusqu'à un équipement noeud amont est obtenue. Une telle information peut comprendre un terme relatif à une somme de temps de traitement dans les équipements noeud amont. Elle peut en outre comprendre un terme relatif à une somme de temps de propagation de la requête entre les équipements noeuds amont de l'équipement noeud intermédiaire dans le plan de commande ou encore de données dans le plan de transfert. Une telle information peut être obtenue par calcul ou par interrogation d'une base de données ou encore être reçue dans un deuxième paramètre de la requête REQ.

Dans une étape R3, l'information relative à un temps de transfert de la requête REQ est mise à jour pour prendre en compte le temps de transfert de la requête entre la sortie de l'équipement noeud amont et la sortie de l'équipement noeud intermédiaire. On comprend donc que cette mise à jour comprend l'obtention du temps de transfert de la requête au niveau dudit équipement intermédiaire, par exemple par calcul, puis son ajout à la valeur de ladite information.

Dans une étape R4, une date (tcₙ) de début de réservation des ressources est calculée au niveau de l'équipement noeud à partir de la valeur dudit premier paramètre (tc, Lw) reçu et de ladite information (LP, Lt, Lpt-corr) obtenue. Un tel calcul peut s'appuyer sur la valeur mise à jour ou non de l'information relative au temps de transfert d'un signal sur la route ABCD.

Lorsque l'équipement noeud est un équipement noeud intermédiaire, le procédé comprend une étape R5 d'envoi de la requête REQ à l'équipement noeud aval sur la route choisie pour le transfert de la requête.

Lorsque l'équipement noeud est l'équipement destination D, le procédé comprend une étape R5' d'envoi d'un message d'accusé-réception de la requête à l'équipement source A sur la même route en sens inverse.

En ce qui concerne le choix de la date de début de connexion au niveau de l'équipement noeud source A, on notera qu'il peut être fait par l'équipement noeud source A lui-même, au moins à partir d'une estimation d'un temps de transfert de la requête REQ. Une telle estimation peut par exemple se faire sur la base des temps de réponses, c'est-à-dire de réception d'un message d'accusé-réception de la requête par l'équipement noeud destination, obtenus sur des connexions passées. L'important est de s'assurer que ce choix permette à la date de début de connexion d'être ultérieure à la réception du message d'accusé-réception des réservations de ressources.

Pour rappel, dans un réseau par commutation de circuits, la connexion n'est pas établie tant que l'équipement noeud source n'a pas reçu un accusé-réception positif en réponse à une requête de réservation de ressources. Si l'accusé de réception est négatif, ou s'il est reçu après la date proposée de début de connexion, la requête (demande de connexion) est "bloquée", et une autre tentative peut être faite le cas échéant avec une nouvelle information relative au début de connexion. Dans ce dernier cas, il peut être utile de prendre en compte le temps de transfert de la requête bloquée pour déterminer la nouvelle valeur de l'information relative au début de connexion. Si cette durée est sous-estimée, la prise en compte de la requête au niveau de tous les équipements noeuds de la route ne sera pas effectivement terminée avant la date de début de la connexion (et la requête sera bloquée). Si elle est surestimée, il y aura un temps d'attente avant de démarrer la connexion et donc une perte de performances.

Dans l'exemple décrit en relation avec la **Fig. 3****,** les équipements noeuds B, C selon l'invention comportent un dispositif 200 de réservation retardée de ressources qui va être décrit en relation avec la **Fig. 5****.** Il comprend les éléments matériels que l'on retrouve classiquement dans un ordinateur conventionnel ou un routeur spécialisé, à savoir un processeur 200₁, une mémoire vive de type RAM 200_{2,} une mémoire morte de type ROM 200_{3,} des moyens de télécommunications 200₄ avec d'autres dispositifs de l'équipement noeud comme un support matériel (hardware) par exemple, constitué de composants de type FPGA, apte à insérer des estampilles temporelles dans les messages de signalisation et des moyens 200₅ de télécommunications avec le réseau

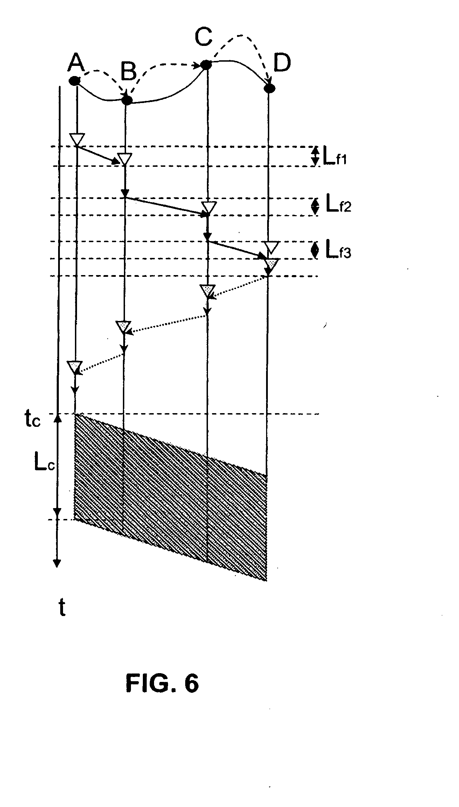

En relation avec la **Fig. 6****,** on présente un exemple de mode de réalisation de l'invention, dans lequel les équipements noeuds du réseau de télécommunications 1 sont en mode synchronisé en temps et le plan de commande et le plan de transfert n'utilisent pas le même support de fibres optiques. Dans ce mode de réalisation on suppose qu'un noeud connaît les temps de propagation sur les fibres du plan de transfert vers ses noeuds voisins. Avantageusement, les temps entre les noeuds voisins sont mesurés entre ces noeuds à l'aide de la mesure optique de temps de propagation selon l'invention.

### Equipement Noeud source A

L'équipement noeud source A qui initie la connexion (source, indice 0) envoie un message de signalisation comprenant une requête de réservation de ressources à l'équipement noeud B participant à la connexion vers l'équipement noeud destination D. Cette requête comprend les trois paramètres L_{C}, t_{c} et Lₚ₀, valorisés comme suit :
- La durée de la connexion demandée **L_{c};**
- La date de début de la connexion au niveau du premier noeud **t_{c};**
- La somme des temps de propagation dans les fibres du plan de transfert depuis l'équipement source A : Lₚ₀=0;

On note que dans ce mode de réalisation, le procédé de mesure optique de temps de propagation est utilisé.

Selon l'invention, l'équipement noeud source A connaît la date où la connexion va effectivement être active pour lui : il s'agit de la période allant de la date **t_{c}** jusqu'à la date **t_{c}** + **L_{c}.**

### Equipement noeud intermédiaire

Les noeuds suivants vont être amenés à modifier le troisième paramètre.

En supposant que pour un équipement noeud n de la connexion :
- le paramètre **Lₚ** reçu dans le message contient la valeur **Lₚₙ₋₁.**

Dans cet exemple, le noeud n met à jour le paramètre **Lₚₙ₋₁** en ajoutant L_{fn} pour obtenir le paramètre **Lₚ** où L_{fn} est le temps de propagation sur la fibre optique du plan de transfert entre le noeud n et le noeud n-1. On notera qu'il aura été possible que le noeud précédent envoie directement la valeur **Lₚₙ.**

Le noeud n peut calculer la date où la connexion va effectivement être active pour lui :
il s'agit de la période allant de la date **t_{c} + Lₚₙ** jusqu'à la date **t_{c} + Lₚₙ + L_{c} avec Lₚₙ = Lₚₙ₋₁ + L_{fn},** . Ce temps est connu du noeud (procédé de mesure optique).
L'équipement noeud n peut retransmettre à l'équipement noeud suivant n+1 le message de signalisation avec les informations suivantes :
   - La durée de la connexion demandée **L_{c};**
   - La date de début de la connexion au niveau du premier noeud **t_{c};**
   - La somme des temps de propagation dans les fibres du plan de transfert depuis l'équipement source A : **Lₚₙ;**

### Noeud destination

L'équipement noeud destination D exécute les mêmes calculs que les noeuds intermédiaires mais ne retransmet pas les paramètres **L_{c}, t_{c}** et **Lₚₙ** dans une requête de réservation (dernier noeud). Le cas échéant, il transfère un message d'accusé-réception au noeud C vers le noeud A.

En relation avec la **Fig. 6****,** on présente un exemple de mode de réalisation de l'invention, dans lequel les équipements noeuds du réseau de télécommunications 1 sont en mode synchronisé en temps et le plan de commande et le plan de transfert n'utilisent pas le même support de fibres optiques. Dans ce mode de réalisation on suppose que tous les temps de propagation sur toutes les fibres du plan de transfert sont connus de tous les noeuds (par exemple : les temps entre les noeuds voisins sont mesurés entre ces noeuds en utilisant le procédé de mesure optique de temps de propagation décrit plus tard dans ce document, et un protocole de découverte automatique (automatic discovery) est utilisé pour distribuer ces temps à chaque noeud du réseau).

### Equipement Noeud source A

L'équipement noeud source A qui initie la connexion (source, indice 0) envoie un message de signalisation comprenant une requête de réservation de ressources à l'équipement noeud B participant à la connexion vers l'équipement noeud destination D. Cette requête ne comprend que deux paramètres L_{C}, t_{c}, valorisés comme suit :
- La durée de la connexion demandée **L_{c};**
- La date de début de la connexion au niveau du premier noeud **t_{c};**

On note que dans ce mode de réalisation, le procédé de mesure optique de temps de propagation est utilisé.

Selon l'invention, l'équipement noeud source A connaît la date où la connexion va effectivement être active pour lui : il s'agit de la période allant de la date **t_{c}** jusqu'à la date **t_{c}** + **L_{c}.**

### Equipement noeud intermédiaire

Les noeuds suivants n'ont pas à modifier les deux paramètres reçus.

Le noeud n peut calculer la date où la connexion va effectivement être active pour lui :
il s'agit de la période allant de la date **t_{c}** + **Lₚₙ** jusqu'à la date **t_{c} + Lₚₙ + L_{c}** avec **Lₚₙ** = **L_{f1}** + **L_{f2}** + ... + **L_{fn},** ou **L_{fn}** est le temps de propagation sur la fibre du plan de transfert entre le noeud n et le noeud n-1. Ces temps sont connus du noeud.

L'équipement noeud n peut retransmettre à l'équipement noeud suivant n+1 le message de signalisation avec les informations suivantes, inchangées :
- La durée de la connexion demandée **Le;**
- La date de début de la connexion au niveau du premier noeud **t_{c};**

### Noeud destination

L'équipement noeud destination D exécute les mêmes calculs que les noeuds intermédiaires mais ne retransmet pas les paramètres **L_{c}** et **t_{c}** dans une requête de réservation (dernier noeud). Le cas échéant, il transfère un message d'accusé-réception au noeud C vers le noeud A.

Dans les exemples précédents, on a supposé que les équipements noeuds disposaient d'horloges synchronisées en temps entre elles avec une exactitude suffisante, de l'ordre de la microseconde.

Une telle synchronisation en temps des noeuds, si elle est possible, coûte cher avec les solutions actuellement disponibles pour atteindre l'exactitude requise (le GPS étant la seule solution disponible aujourd'hui pour atteindre la µs) ou bien ne procure pas l'exactitude suffisante avec d'autres méthodes protocolaires telles qu'actuellement disponibles. On notera que des travaux sont actuellement en cours (bien que non finalisés pour le moment) en vue de permettre le transfert d'une synchronisation en temps par le réseau avec une exactitude qui pourrait s'approcher de celle requise par l'invention dans son mode de réalisation en mode synchronisé.

En cas de mauvaise synchronisation entre les horloges des noeuds, il faut prendre des marges sur la réservation ce qui réduit les performances. Les simulations montrent qu'au delà de 1 µs de marges, donc lorsque l'exactitude de la référence de temps commune aux noeuds dépasse 1µs, les performances se dégradent rapidement (dans le cas où la durée des connexions est de 1ms en moyenne).

Pour améliorer la situation, on comprend qu'il faut prévoir un traitement particulier pour les réseaux qui ne sont pas ou mal synchronisés en temps.

On considère donc le cas où les équipements noeuds du réseau de télécommunications 1 ne sont pas synchronisés en temps. Ils n'ont donc pas accès à une référence de temps commune. Ils peuvent éventuellement être synchronisés en fréquence (donc avoir accès à une fréquence de référence commune), ou bien être asynchrones, mais avoir accès à une base de temps en mode libre.

On notera aussi que le mode de réalisation de l'invention destiné aux noeuds non synchronisés en temps s'applique aussi aux noeuds synchronisés en temps. Dans ce cas, il permet de faire fonctionner des cas de réseaux synchronisés de façon hétérogène : par exemple dans les cas où la source primaire de synchronisation en temps n'est pas faite de la même façon entre des domaines différents (par exemple entre des équipements de différents opérateurs), ou encore les cas où seule une partie du réseau est synchronisé en temps.

Contrairement aux cas précédents où les noeuds étaient synchronisés en temps, la connaissance de la date du début de la connexion au niveau du premier noeud n'est pas utilisable par les noeuds intermédiaires puisque les noeuds n'ont pas accès à une référence de temps commune. A la place, l'équipement noeud source initiant la connexion indique dans un paramètre de la requête REQ dans combien de temps la connexion va démarrer, à partir de l'instant d'envoi du premier message de signalisation de requête par le premier noeud. Autrement dit, il indique une durée d'attente avant le début de la connexion au niveau du premier noeud à la place d'une date de début de connexion au niveau du premier noeud. La durée **L_{w}** à attendre avant le début de connexion à partir de l'instant d'envoi du premier message de signalisation par le premier noeud est proposée par l'équipement noeud source initiant la connexion. Elle doit être appropriée par rapport au temps de signalisation (voir explications plus haut).

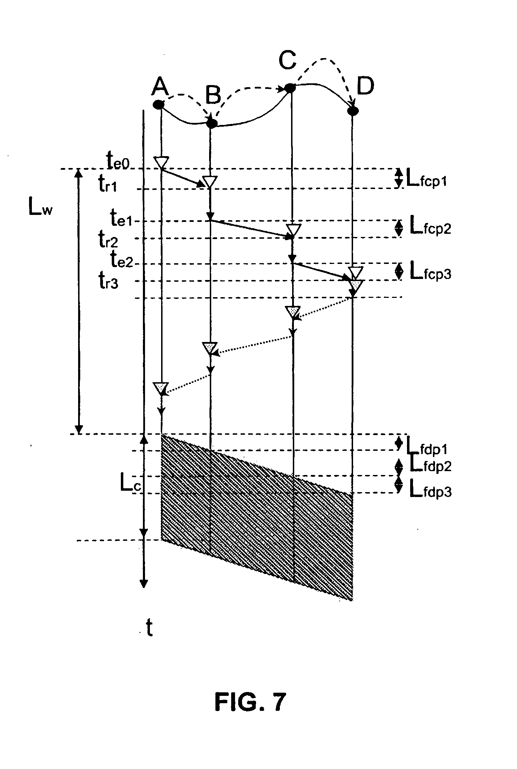

On présente, en relation avec la **Fig. 7****,** un exemple de mode de réalisation de l'invention, dans lequel les équipements noeuds du réseau de télécommunications 1 sont en mode non synchronisé en temps et le plan de commande et le plan de transfert n'utilisent pas le même support de fibres optiques. On considère dans cet exemple que chaque équipement noeud calcule son temps de traitement (variable d'un message à l'autre et d'un noeud à l'autre) du message de signalisation de requête, et indique à l'équipement noeud suivant dans le message de signalisation qu'il lui transmet la somme des temps de traitement cumulés depuis le premier équipement noeud A, corrigée des différences de propagation entre les liens du plan de commande et du plan de transfert.

Les trois paramètres échangés entre les noeuds sont les suivants :
- La durée de la connexion demandée **L_{c};**
- La durée à attendre avant le début de connexion à partir de l'instant d'envoi du premier message de signalisation par le premier noeud **L_{w};**
- La durée de traitement cumulée dans les équipements noeuds amont corrigée des différences de propagation entre les liens du plan de commande et du plan de transfert **L_{pt-corr}.**

A l'aide de cette durée, chaque noeud peut déduire sa date locale de début de connexion. En effet, chaque noeud considère une date de début de connexion virtuelle si les temps de traitement étaient nuls, qui correspond à la date de réception du message augmenté des temps de traitement accumulés. Cette durée est corrigée avec les différences de transit entre les fibres optiques du plan de commande et celles du plan de transfert. Cette correction permet au noeud suivant de corriger sa date de réception : la nouvelle date "virtuelle" est la date à laquelle le message aurait été reçu si les durées de transit dans le plan de commande et le plan de transfert avaient été identiques (on se ramène donc au cas précédent).

Dans la suite, on désignera par L_{fcpn} et L_{fdpn} les valeurs des durées de transit sur la fibre sur le plan de commande et le plan de transfert respectivement, entre les noeuds n et n+1.

On note que dans ce mode de réalisation, le procédé de mesure optique de temps de propagation est utilisé dans les plans de commande et de transfert.

### Noeud source

Le noeud qui initie la connexion (source, indice 0) envoie un message de signalisation aux noeuds participants à la connexion, contenant les informations suivantes :
- La durée de la connexion demandée (**L_{c}**)
- La durée d'attente avant le début de la connexion **L_{w};**
- La durée de traitement cumulée corrigée avec la différence de temps de transit entre la fibre du plan de commande et celle du plan de transfert. Au noeud source la durée de traitement n'est pas comptabilisée, **L_{pt-corr}** est donc initialisée avec L_{fcp0} - L_{fdp0}.

En variante, les valeurs L_{fcp0} - L_{fdp0} du paramètre **L_{pt-corr}** peuvent être mises à jour par le noeud suivant

Le noeud source peut calculer la date locale où la connexion va effectivement être active pour lui :
il s'agit de la période allant de la date **tₑ₀** + **L_{w}** jusqu'à la date **tₑ₀** + **L_{w}** + **L_{c},**

### Noeud intermédiaire

Les noeuds suivants vont être amenés à modifier le troisième paramètre.

En supposant que pour un noeud n de la connexion :
- le message de signalisation est reçu à la date **tᵣₙ;**
- le message de signalisation est retransmis vers le noeud n+1 à la date **tₑₙ;**
- le paramètre **L_{pt-corr}** reçu dans le message contient la valeur **L_{pt-corr-n-1}.**

Le noeud n calcule la date où la connexion va effectivement être active pour lui : il s'agit de la période allant de la date **tᵣₙ** + **L_{w} - L_{pt-corr-n-1}** jusqu'à la date **tᵣₙ** + **L_{w} - L_{pt-corrn-1}** + **L_{c}.**

Le noeud n retransmet au noeud suivant n+1 le message de signalisation mis à jour avec les informations suivantes :
- La durée de la connexion demandée **Lc;**
- La durée d'attente **Lw;**
- La durée de traitement accumulée depuis le premier noeud **L_{pt-corr}** = **L_{pt-corr-n}** = **L_{pt-corr-n-1}** + **tₑₙ - tᵣₙ**+ **L_{fcpn} - L_{fdpn};**

### Noeud destination

Le noeud destination D exécute les mêmes calculs que les noeuds intermédiaires mais ne retransmet pas le message de signalisation de requête (dernier noeud). Le cas échéant il transfère un message d'accusé-réception aux noeuds amonts à destination de l'équipement source A.

Dans un mode de réalisation similaire, les corrections effectuées sur le temps de traitement cumulé avec les différences de temps de propagation entre les liens du plan de commande et du plan de transfert peuvent être effectuée dans les noeuds sur la base de leur connaissance des temps fibres de tous les liens du réseau. Dans ce cas le paramètre L_{pt-corr} est mis a jour seulement avec les temps de traitement cumulés.

Note : une alternative au mode de réalisation précédent est possible en considérant que les temps de traitement des messages de signalisation dans les équipements noeuds sont imposés dans chacun des équipements noeuds du plan de commande. On notera que ce mode est plus complexe techniquement à réaliser que le premier. Dans ce mode de réalisation:
∘ Chaque noeud participant à la connexion doit avoir connaissance des temps de traitement imposés dans tous les noeuds précédents depuis le premier noeud de la connexion;
∘ Chaque noeud participant à la connexion doit pouvoir déterminer la somme des temps de propagation sur les fibres dans le plan de commande depuis le premier noeud (éventuellement à partir de la connaissance de tous les temps fibre du plan de commande);
∘ Chaque noeud participant à la connexion doit pouvoir déterminer la somme des temps de propagation sur les fibres dans le plan de transfert depuis le premier noeud (éventuellement à partir de la connaissance de tous les temps fibre du plan de transfert).

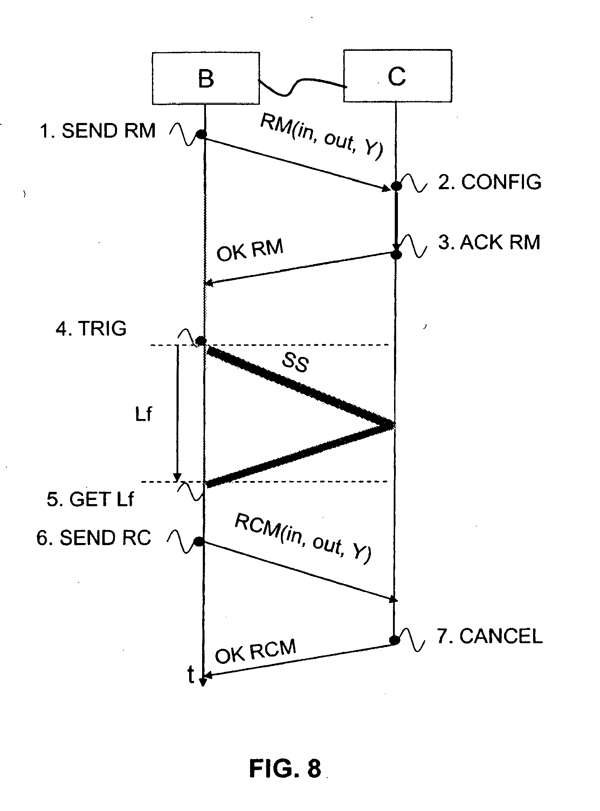

En relation avec la **Fig. 8****,** on présente maintenant un exemple de mesure d'un temps de transit **L_{f}** dans un lien optique reliant l'équipement noeud n selon l'invention à un de ses voisins dans le réseau de télécommunications 1. Comme évoqué précédemment, la mesure qui va être décrite peut être mise en oeuvre par l'équipement noeud, soit suite à une requête de réservation, soit préalablement à la réception et au traitement d'une telle requête. Elle peut aussi être renouvelée régulièrement.

Le principe d'une telle mesure va maintenant être décrit. On considère que l'équipement noeud n et son voisin n+1 ont connaissance des liens optiques qui les relient, par exemple en utilisant un protocole de gestion de lien de type LMP (Link Management Protocol). Les équipements noeuds n et n+1 considérés comprennent de façon classique un contrôleur optique apte à contrôler l'envoi de signaux optiques sur un desdits liens optiques.

Dans une première étape, l'équipement noeud n envoie un message de signalisation à l'équipement noeud n+1 comprenant une requête RM de mesure de durée de propagation. Une telle requête comprend une indication d'un port de sortie out par l'intermédiaire duquel l'équipement noeud n va émettre un signal de mesure et un port d'entrée in sur lequel l'équipement noeud n souhaite recevoir le signal de mesure en retour. Elle indique en outre sur quel port d'entrée Y de l'équipement n+1 l'équipement noeud n va envoyer son signal de mesure.

Sur réception de cette requête, l'équipement noeud n+1 configure au niveau de son switch optique un bouclage entre le port Y et un port X de sortie apte à transférer directement le signal de mesure de réponse.

Dans une troisième étape, il envoie à l'équipement noeud n un message de signalisation OK RM d'accusé-réception indiquant qu'il est prêt pour la mesure.

Dans une quatrième étape, l'équipement noeud n déclenche la mesure en commandant à son contrôleur optique d'envoyer un signal optique de type sonde à destination du port Y de l'équipement noeud n+1 et de se mettre en attente d'un signal de réponse. Un tel signal de type sonde peut être une simple sinusoïde, il n'est pas nécessaire d'envoyer une séquence numérique codée.

Au niveau de l'équipement noeud n+1 destinataire, aucune action spécifique n'est requise pour cette mesure, car, du fait du bouclage optique des ports d'entrée Y et de sortie X, le signal de type sonde est redirigé vers le port in de l'équipement n de façon transparente pour le noeud n+1.

A l'instant de réception du signal sonde SS de retour, l'équipement noeud n stoppe la mesure et relève la durée de transit L_{f} mesurée.

De façon avantageuse, l'équipement noeud n peut libérer les ressources mises en jeu au niveau de l'équipement n+1 en lui envoyant un message de signalisation indiquant la fin de la mesure.

On comprend que les temps obtenus sont uniquement dépendants de la précision de l'horloge de l'équipement noeud n qui déclenche la mesure. Les temps de propagation sur les liens d'un réseau de télécommunications optiques étant de l'ordre la dizaine de millisecondes pour le temps d'aller-retour, et la stabilité d'une horloge étant estimée à au moins 20 ppm, la précision de ce type de mesure est donc de l'ordre de 200 nanosecondes (ns) pour 10ms de délai et 20 ns pour 1 ms (0.002%). Il peut donc être utile que le réseau soit synchronisé en fréquence, afin d'améliorer la précision de ces mesures.

## Revendications

1. Procédé de traitement d'une requête (REQ) de réservation de ressources retardée dans un réseau de télécommunications optiques pour transférer des données entre un équipement source et un équipement destination, dans lequel, sur réception par un équipement noeud (B, C, D) du réseau de la requête de réservation de ressources en provenance de l'équipement source (A) et à destination de l'équipement destination (D) via une route dans un plan de commande du réseau comprenant au moins un équipement noeud intermédiaire (B, C), ladite requête comprenant au moins un premier paramètre relatif à un début de la connexion au niveau de l'équipement source, ledit procédé comprend les étapes suivantes :
- obtention (R2) d'une information relative à un temps de transfert d'un signal via une route dans un plan de transfert du réseau, différent du plan de commande, jusqu'à un équipement noeud amont dudit équipement noeud (B,C,D) sur la route,
- mise à jour (R3) de ladite information par ajout d'un temps de transfert d'un signal au niveau dudit équipement noeud (B,C,D), et
- calcul (R4) d'une date de début de réservation des ressources au niveau de l'équipement noeud (B,C,D) à partir de la valeur dudit premier paramètre reçu et de ladite information.

2. Procédé de traitement d'une requête de réservation retardée selon la revendication **1, caractérisé en outre en ce que** l'information relative à un temps de transfert est obtenue dans un deuxième paramètre de la requête reçue.

3. Procédé de traitement d'une requête de réservation retardée selon la revendication **2, caractérisé en outre en ce que**, lorsque l'équipement noeud est un équipement noeud intermédiaire, ledit procédé comprend une étape d'envoi de la requête (REQ) à un équipement noeud aval sur ladite route, ladite requête comprenant la valeur mise à jour de ladite information dans le deuxième paramètre.

4. Procédé de traitement d'une requête de réservation retardée selon la revendication **1, caractérisé en outre en ce que**, lorsque les équipements noeuds du réseau sont synchronisés en temps, le premier paramètre comprend une date de début de réservation pour l'équipement noeud source et l'étape de calcul d'une date de réservation des ressources au niveau de l'équipement noeud comprend l'addition de la valeur de ladite information et de la valeur de ladite date de début de réservation.

5. Procédé de traitement d'une requête de réservation retardée selon la revendication **1, caractérisé en outre en ce que**, lorsque les équipements noeuds du réseau sont non synchronisés en temps, le premier paramètre comprend une durée d'attente avant la date de début de réservation et l'étape de calcul d'une date de réservation des ressources au niveau de l'équipement noeud comprend la soustraction de la valeur de ladite information à une date de réception de la requête (REQ) par l'équipement noeud intermédiaire augmentée de la valeur du premier paramètre.

6. Procédé de traitement d'une requête de réservation retardée selon la revendication **1 caractérisé en outre en ce que**
- l'information relative à un temps de transfert comprend un terme relatif à une somme de temps de propagation de données via ladite route jusqu'à l'équipement noeud amont ;et
- la mise à jour de ladite information comprend un ajout de la durée de propagation entre l'équipement noeud amont et l'équipement noeud intermédiaire à la valeur reçue dudit paramètre.

7. Procédé de traitement d'une requête de réservation retardée selon les revendications **5 et 6, caractérisé en outre en ce que** ledit terme de ladite information comprend une différence entre une somme des temps de propagation de la requête et la somme des temps de propagation des données jusqu'à l'équipement noeud amont.

8. Procédé de traitement d'une requête de réservation retardée selon la revendication **6** ou **7, caractérisé en outre en ce que** le terme de ladite information relative à un temps de transfert d'un signal via ladite route jusqu'à l'équipement noeud amont est obtenu à partir d'une mesure d'un temps de propagation de données de l'équipement noeud intermédiaire vers un équipement noeud amont selon les sous-étapes suivantes :
- envoi d'une requête de mesure à l'équipement noeud amont, ladite requête comprenant une indication d'un port d'entrée et d'un port de sortie dudit équipement noeud intermédiaire pour ladite mesure;
- sur réception d'un message de réponse positive de l'équipement noeud amont, déclenchement de la mesure par envoi d'un signal de type sonde depuis le port de sortie indiqué vers l'équipement noeud amont; et
- stoppage de la mesure à réception du signal de type sonde par l'équipement noeud intermédiaire sur le port d'entrée indiqué.

9. Dispositif de traitement d'une requête de réservation de ressources retardée dans un réseau de télécommunications optiques pour transférer des données entre un équipement source et un équipement destination, dans lequel, sur réception par un équipement noeud (B,C,D) du réseau de la requête (REQ) de réservation de ressources en provenance de l'équipement source (A) et à destination de l'équipement destination(D) via une route d'un plan de commande du réseau comprenant au moins un équipement noeud intermédiaire (B,C), ladite requête comprenant au moins un premier paramètre relatif à un début de la connexion au niveau de l'équipement source, ledit dispositif est apte à mettre en oeuvre les moyens suivants:
- obtention d'une information relative à un temps de transfert d'un signal via une route d'un plan de transfert du réseau, différent du plan de commande, jusqu'à un équipement noeud amont dudit équipement noeud (B,C,D) sur la route,
- mise à jour de ladite information par ajout d'un temps de transfert d'un signal au niveau dudit équipement noeud (B,C,D), et
- calcul d'une date de début de réservation des ressources au niveau de l'équipement noeud (B,C,D) à partir de la valeur dudit paramètre reçu et de ladite information obtenue.

10. Dispositif de réservation de ressources selon la revendication **9,** dans lequel, sur réception d'une requête de mesure en provenance d'un équipement noeud voisin, il est apte à mettre en oeuvre les moyens suivants :
- identification d'un port d'entrée et d'un port de sortie dans la requête de mesure;
- commande de bouclage du port d'entrée et du port de sortie identifiés;
- envoi d'un message d'acquittement à destination de l'équipement noeud voisin.

11. Equipement noeud d'un réseau de télécommunications apte à transférer des données en provenance d'un équipement source et à destination d'un équipement destination connectés audit réseau, l'équipement comprenant un dispositif de réservation de ressources retardée selon la revendication **9.**

12. Réseau de télécommunications optiques apte à transmettre des données entre un équipement source et un équipement destination par l'intermédiaire d'au moins un équipement noeud intermédiaire dudit réseau, dans lequel ledit équipement noeud intermédiaire comprend un dispositif de traitement d'une requête de réservation retardée selon la revendication **9.**

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de traitement d'une requête de réservation de ressources retardée selon la revendication **1.**

## Patentansprüche

1. Verfahren zum Verarbeiten einer Anforderung zur verzögerten Betriebsmittelreservierung (REQ) in einem optischen Telekommunikationsnetz, um Daten zwischen einem Quellgerät und einem Zielgerät zu übertragen, wobei das Verfahren bei Empfang durch ein Knotengerät (B, C, D) des Netzes der Betriebsmittelreservierungsanforderung, die von dem Quellgerät (A) stammt und das Zielgerät (D) zum Ziel hat, über eine Route in einer Steuerschicht des Netzes, die wenigstens ein zwischen knotengerät (B, C) enthält, wobei die Anforderung wenigstens einen ersten auf den Beginn der Verbindung auf Höhe des Quellgeräts bezogen Parameter enthält, die folgenden Schritte umfasst:
- Erhalten (R2) von Informationen bezüglich einer Übertragungszeit eines Signals über eine Route in einer Übertragungsschicht des Netzes, die von der Steuerschicht verschieden ist, bis zu einem stromaufseitigen Knotengerät des Knotengeräts (B, C, D) über die Route,
- Aktualisieren (R3) der Informationen durch Hinzufügen einer Übertragungszeit eines Signals auf Höhe des Knotengeräts (B, C, D); und
- Berechnen (R4) eines Datums des Beginns der Betriebsmittelreservierung auf Höhe des Knotengeräts (B, C, D) anhand des Wertes des empfangenen ersten Parameters und der Informationen.

2. Verfahren zum Verarbeiten einer Anforderung zur verzögerten Reservierung nach Anspruch 1, außerdem **dadurch gekennzeichnet, dass** die Informationen bezüglich einer Übertragungszeit in einem zweiten Parameter der empfangenen Anforderung erhalten wird.

3. Verfahren zum Verarbeiten einer Anforderung zur verzögerten Reservierung nach Anspruch 2, außerdem **dadurch gekennzeichnet, dass** dann, wenn das Knotengerät ein Zwischenknotengerät ist, das Verfahren einen Schritt des Schickens der Anforderung (REQ) zu einem stromabseitigen Zielgerät auf der Route umfasst, wobei die Anforderung den aktualisierten Wert der Informationen in dem zweiten Parameter enthält.

4. Verfahren zum Verarbeiten einer Anforderung zur verzögerten Reservierung nach Anspruch 1, außerdem **dadurch gekennzeichnet, dass** dann, wenn die Knotengeräte des Netzes zeitlich synchronisiert sind, der erste Parameter ein Datum des Beginns der Reservierung für das Quellknotengerät enthält und der Schritt des Berechnens eines Datums der Betriebsmittelreservierung auf Höhe des Knotengeräts die Addition des Wertes der Informationen und des Wertes des Datums des Reservierungsbeginns umfasst.

5. Verfahren zum Verarbeiten einer Anforderung zur verzögerten Reservierung nach Anspruch 1, außerdem **dadurch gekennzeichnet, dass** dann, wenn die Knotengeräte des Netzes zeitlich nicht synchronisiert sind, der erste Parameter eine Dauer des Wartens vor dem Datum des Reservierungsbeginns enthält und der Schritt des Berechnens eines Datums der Betriebsmittelreservierung auf Höhe des Knotengeräts die Subtraktion des Wertes der Informationen von einem Datum des Empfangs der Anforderung (REQ) durch das Zwischenknotengerät, erhöht um den Wert des ersten Parameters, umfasst.

6. Verfahren zum Verarbeiten einer Anforderung zur verzögerten Reservierung nach Anspruch 1, außerdem **dadurch gekennzeichnet, dass**:
- die Informationen bezüglich einer Übertragungszeit einen Term bezüglich einer Summe von Ausbreitungszeiten von Daten über die Route bis zu dem stromaufseitigen Knotengerät enthalten; und
- die Aktualisierung der Informationen eine Hinzufügung der Ausbreitungsdauer zwischen dem stromaufseitigen Knotengerät und dem Zwischenknotengerät zu dem empfangenen Wert des Parameters umfasst.

7. Verfahren zum Verarbeiten einer Anforderung zur verzögerten Reservierung nach den Ansprüchen 5 und 6, außerdem **dadurch gekennzeichnet, dass** der Term der Informationen eine Differenz zwischen einer Summe von Ausbreitungszeiten der Anforderung und einer Summe der Ausbreitungszeiten der Daten bis zu dem stromaufseitigen Knotenendgerät umfasst.

8. Verfahren zum Verarbeiten einer Anforderung zur verzögerten Reservierung nach Anspruch 6 oder 7, außerdem **dadurch gekennzeichnet, dass** der Term der Informationen bezüglich einer Übertragungszeit eines Signals über die Route bis zu dem stromaufseitigen Knotenendgerät anhand einer Messung einer Ausbreitungszeit von Daten von dem Zwischenknotengerät zu dem stromaufseitigen Knotengerät gemäß den folgenden Unterschritten erhalten wird:
- Schicken einer Messanforderung zu dem stromaufseitigen Knotenendgerät, wobei die Anforderung eine Angabe eines Eingangsanschlusses und eines Ausgangsanschlusses des Zwischenknotengeräts für die Messung enthält;
- bei Empfang einer positiven Antwortnachricht von dem stromaufseitigen Antwortgerät Auslösen der Messung durch Schicken eines Signals des Sondentyps von dem angegebenen Ausgangsanschluss zu dem stromaufseitigen Knotengerät; und
- Anhalten des Messens bei Empfang des Signals des Sondentyps durch das Zwischenknotengerät an dem angegebenen Eingangsanschluss.

9. Vorrichtung zum Verarbeiten einer Anforderung zur verzögerten Betriebsmittelreservierung in einem optischen Telekommunikationsnetz, um Daten zwischen einem Quellgerät und einem Zielgerät zu übertragen, wobei die Vorrichtung bei Empfang durch ein Knotengerät (B, C, D) des Netzes der Betriebsmittelreservierungsanforderung (REQ), die von dem Quellgerät (A) stammt und das Zielgerät (D) zum Ziel hat, über eine Route einer Steuerschicht des Netzes, das wenigstens ein zwischenknotengerät (B, C) enthält, wobei die Anforderung wenigstens einen ersten Parameter bezüglich eines Beginns der Verbindung auf Höhe des Quellgeräts enthält, dafür ausgelegt ist, die folgenden Mittel zu betreiben:
- Erhalten von Informationen bezüglich einer Übertragungszeit eines Signals über eine Route einer Übertragungsschicht des Netzes, die von der Steuerschicht verschieden ist, bis zu einem stromaufseitigen Knotengerät des Knotengeräts (B, C, D) über die Route;
- Aktualisieren der Informationen durch Hinzufügen einer Übertragungszeit eines Signals auf Höhe des Knotengeräts (B, C, D) und
- Berechnen von Daten des Beginns der Betriebsmittelreservierung auf Höhe des Knotengeräts (B, C, D) anhand des Wertes des empfangenen Parameters und der erhaltenen Informationen.

10. Betriebsmittelreservierungsvorrichtung nach Anspruch 9, wobei sie bei Empfang einer Messanforderung von einem benachbarten Knotengerät dafür ausgelegt ist, die folgenden Mittel zu betreiben:
- Identifizieren eines Eingangsanschlusses und eines Ausgangsanschlusses für die Messung;
- Schleifensteuern des Eingangsanschlusses und des Ausgangsanschlusses, die identifiziert worden sind;
- Schicken einer Quittierungsnachricht zu dem benachbarten Knotengerät.

11. Knotengerät eines Telekommunikationsnetzes, das Daten von einem Quellgerät zu einem Zielgerät, die mit dem Netz verbunden sind, übertragen kann, wobei das Gerät eine Vorrichtung zum verzögerten Reservieren von Betriebsmitteln nach Anspruch 9 umfasst.

12. Optisches Telekommunikationsnetz, das Daten zwischen einem Quellgerät und einem Zielgerät über wenigstens ein Zwischenknotengerät des Netzes senden kann, wobei das Zwischenknotengerät eine Vorrichtung zum Verarbeiten einer Anforderung zur verzögerten Reservierung nach Anspruch 9 umfasst.

13. Computerprogrammprodukt, das von einem Kommunikationsnetz fernladbar ist und/oder auf einem durch einen Computer lesbaren Träger gespeichert ist und/oder von einem Mikroprozessor ausführbar ist, **dadurch gekennzeichnet, dass** es Programmcode-Befehle für die Ausführung des Verfahrens zum Verarbeiten einer Anforderung zur verzögerten Betriebsmittelreservierung nach Anspruch 1 enthält.

## Claims

1. Method for processing a delayed resource reservation request (REQ) in an optical telecommunication network to transfer data between a source element and a destination element, in which, on reception by a node element (B, C, D) of the network of the resource reservation request from the source element (A) and addressed to the destination element (D) via a route in a control plane of the network including at least one intermediate node element (B, C), said request comprising at least one first parameter relating to a start of the connection at the source element, said method comprises the following steps:
- obtaining (R2) information relating to a transfer time of a signal via a route in a transfer plane of the network different from the control plane, to an upstream node element of said node element (B, C, D) on the route
- updating (R3) said information by adding a transfer time of a signal at said node element (B, C, D), and
- computing (R4) a resource reservation start time at the node element (B, C, D) based on the value of said first parameter received and said information.

2. Method for processing a delayed reservation request according to Claim **1,** further **characterized in that** the information relating to a transfer time is obtained in a second parameter of the received request.

3. Method for processing a delayed reservation request according to Claim **2,** further **characterized in that**, when the node element is an intermediate node element, said method comprises a step for sending the request (REQ) to a downstream node element on said route, said request comprising the updated value of said information in the second parameter.

4. Method for processing a delayed reservation request according to Claim **1,** further **characterized in that**, when the node elements of the network are synchronized in time, the first parameter comprises a reservation start time for the source node element and the step for computing a resource reservation time at the node element comprises the addition of the value of said information and of the value of said reservation start time.

5. Method for processing a delayed reservation request according to Claim **1,** further **characterized in that**, when the node elements of the network are not synchronized in time, the first parameter comprises a waiting time before the reservation start time and the step for computing a resource reservation time at the node element comprises the subtraction of the value of said information from a time of reception of the request (REQ) by the intermediate node element plus the value of the first parameter.

6. Method for processing a delayed reservation request according to Claim **1,** further **characterized in that**
- the information relating to a transfer time comprises a term relating to an aggregate of data propagation times via said route to the upstream node element; and
- the updating of said information comprises an addition of the propagation time between the upstream node element and the intermediate node element to the received value of said parameter.

7. Method for processing a delayed reservation request according to Claims **5 and 6,** further **characterized in that** said term of said information comprises a difference between an aggregate of the propagation times of the request and the aggregate of the propagation times of the data to the upstream node element.

8. Method for processing a delayed reservation request according to Claim **6** or **7,** further **characterized in that** the term of said information relating to a transfer time of a signal via said route to the upstream node element is obtained from a measurement of a data propagation time from the intermediate node element to an upstream node element according to the following substeps:
- sending of a measurement request to the upstream node element, said request comprising an indication of an input port and of an output port of said intermediate node element for said measurement;
- on reception of a positive response message from the upstream node element, initiation of the measurement by sending a probe-type signal from the indicated output port to the upstream node element; and
- stopping of the measurement on reception of the probe-type signal by the intermediate node element on the indicated input port.

9. Device for processing a delayed resource reservation request in an optical telecommunication network to transfer data between a source element and a destination element, in which, on reception by a node element (B, C, D) of the network of the resource reservation request (REQ) from the source element (A) and addressed to the destination element (D) via a route of a control plane of the network including at least one intermediate node element (B, C), said request comprising at least one first parameter relating to a start of the connection at the source element, said device is suitable for implementing the following means:
- obtaining of information relating to a transfer time of a signal via a route of a transfer plane of the network different from the control plane, to an upstream node element of said node element (B, C, D) on the route,
- updating of said information by adding a transfer time of a signal at said node element (B, C, D), and
- computation of a resource reservation start time at the node element (B, C, D) based on the value of said parameter received and said information obtained.

10. Resource reservation device according to Claim **9,** in which, on reception of a measurement request from a neighboring node element, it is suitable for implementing the following means:
- identification of an input port and an output port in the measurement request;
- loop control of the identified input port and output port;
- sending of an acknowledgement message to the neighboring node element.

11. Node element of a telecommunication network suitable for transferring data from a source element and addressed to a destination element, both connected to said network, the element comprising a delayed resource reservation device according to Claim **9**.

12. Optical telecommunication network suitable for transmitting data between a source element and a destination element via at least one intermediate node element of said network, in which said intermediate node element comprises a device for processing a delayed reservation request according to Claim **9**.

13. Computer program product that can be downloaded from a communication network and/or stored on a computer-readable medium and/or that can be executed by a microprocessor, **characterized in that** it comprises program code instructions for executing the method for processing a delayed resource reservation request according to Claim **1**.
